# FASCICULE DE BREVET EUROPEEN

(11) **EP 2 984 443 B1**
(45) Date de publication et mention de la délivrance du brevet: **31.05.2017**
(21) Numéro de dépôt: 14721462.1
(22) Date de dépôt: 08.04.2014
(51) Int. Cl.: G01B 11/25

(54) **SYSTEME D'ACQUISITION D'IMAGES TRIDIMENSIONNELLES**
DREIDIMENSIONALES BILDERFASSUNGSSYSTEM
THREE-DIMENSIONAL IMAGE ACQUISITION SYSTEM

(30) Priorité: 09.04.2013 FR 1353170
(43) Date de publication de la demande: 17.02.2016
(73) Titulaire: VIT, 38120 Saint-Egreve (FR)
(72) Inventeur: PERRIOLLAT, Mathieu, F-38120 Saint-Egreve (FR); LAN, Ke-Hua, F-38120 Saint-Egreve (FR)
(74) Mandataire: Thibon, Laurent
(86) Numéro de dépôt international: PCT/FR2014/050840
(87) Numéro de publication internationale: WO 2014/167238

(56) Documents cités:
- EP-A1- 2 839 238
- DE-A1- 19 852 149
- US-A1- 2009 169 095
- US-A1- 2012 019 651

## Description

La présente demande de brevet revendique la priorité de la demande de brevet français FR13/53170.

### Domaine

La présente demande concerne de façon générale les systèmes d'inspection optique et, plus particulièrement, les systèmes de détermination d'images tridimensionnelles destinés à l'analyse en ligne d'objets, notamment de circuits électroniques. La demande concerne plus particulièrement un tel système d'acquisition assurant un traitement rapide et efficace des informations obtenues.

### Exposé de l'art antérieur

Des systèmes d'acquisition d'images tridimensionnelles sont connus. Par exemple, dans le domaine de l'inspection de cartes de circuit imprimé, il est connu d'éclairer une scène à l'aide d'un ou de plusieurs projecteurs de motifs positionnés au-dessus de la scène et, à l'aide d'une ou de deux caméras monochromes ou couleur, de détecter la forme des motifs obtenus sur la scène tridimensionnelle. Un traitement d'images est ensuite réalisé pour reconstruire la structure tridimensionnelle de la scène observée.

Un inconvénient des dispositifs connus est que, en fonction de la structure tridimensionnelle de la scène à observer, et notamment des différences de niveaux de cette structure, la reconstruction peut être de mauvaise qualité.

Un besoin existe donc d'un système d'acquisition d'images tridimensionnelles palliant tout ou partie des inconvénients de l'art antérieur.

### Résumé

Les documents US2012/0019651 et DE19852149 décrivent un système pour déterminer les coordonnées spatiales d'un objet utilisant des projecteurs et des caméras.

Le document US-A-2009/0169095 décrit un procédé pour générer une lumière structurée pour des images tridimensionnelles.

Un objet d'un mode de réalisation est de prévoir un dispositif d'acquisition d'images tridimensionnelles impliquant des traitements d'image rapides et efficaces, quelle que soit la forme de la scène tridimensionnelle à observer.

Ainsi, un mode de réalisation prévoit un dispositif d'acquisition d'images tridimensionnelles, comprenant :
au moins deux systèmes distincts, comprenant chacun un projecteur et quatre caméras,
les au moins deux projecteurs étant alignés selon une direction et adaptés à éclairer une scène, les axes de projection des projecteurs définissant un plan ;
le dispositif étant tel que pour chaque projecteur, et tournées vers la scène, la première et la deuxième caméras sont placées d'un côté dudit plan et la une troisième et la quatrième caméras sont placées d'un autre côté dudit plan, l'axe optique des première et deuxième caméras formant respectivement avec ledit plan un premier et un deuxième angles distincts, l'axe optique des troisième et quatrième caméras formant respectivement avec ledit plan un troisième et un quatrième angles distincts ; et
des dispositifs d'éclairement alternatif de couleur bleue, rouge, verte ou blanche.

Selon un mode de réalisation, les axes optiques des premières, deuxièmes, troisièmes et quatrièmes caméras sont perpendiculaires à ladite direction.

Selon un mode de réalisation, les premier et troisième angles sont égaux et les deuxième et quatrième angles sont égaux, au signe près.

Selon un mode de réalisation, pour chaque projecteur, les axes optiques des première et troisième caméras sont coplanaires et les axes optiques des deuxième et quatrième caméras sont coplanaires.

Selon un mode de réalisation, pour chaque projecteur, les axes optiques des première et quatrième caméras sont coplanaires et les axes optiques des deuxième et troisième caméras sont coplanaires.

Selon un mode de réalisation, toutes les caméras sont intercalées entre les projecteurs dans ladite direction.

Selon un mode de réalisation, le premier angle est supérieur à 18° et est inférieur au deuxième angle, l'écart entre le premier et le deuxième angle étant supérieur à 10°, et le troisième angle est supérieur à 18° et inférieur au quatrième angle, l'écart entre le troisième et le quatrième angle étant supérieur à 10°.

Selon un mode de réalisation, les dispositifs d'éclairement sont intercalés entre chacun des projecteurs et sont adaptés à éclairer la scène.

Selon un mode de réalisation, chacune des caméras comprend un capteur d'image placé de façon inclinée par rapport à l'axe optique de la caméra.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 illustre un système d'acquisition d'images tridimensionnelles ;
la figure 2 est une vue de côté du système de la figure 1 ;
la figure 3 illustre un système d'acquisition selon un mode de réalisation ;
la figure 4 est une vue de côté d'un système d'acquisition selon un mode de réalisation ;
les figures 5 et 6 sont des vues de dessus de deux systèmes d'acquisition selon des modes de réalisation ; et
les figures 7A et 7B illustrent des motifs susceptibles d'être utilisés dans un système selon un mode de réalisation.

Par souci de clarté, de mêmes éléments ont été désignés par de mêmes références aux différentes figures.

### Description détaillée

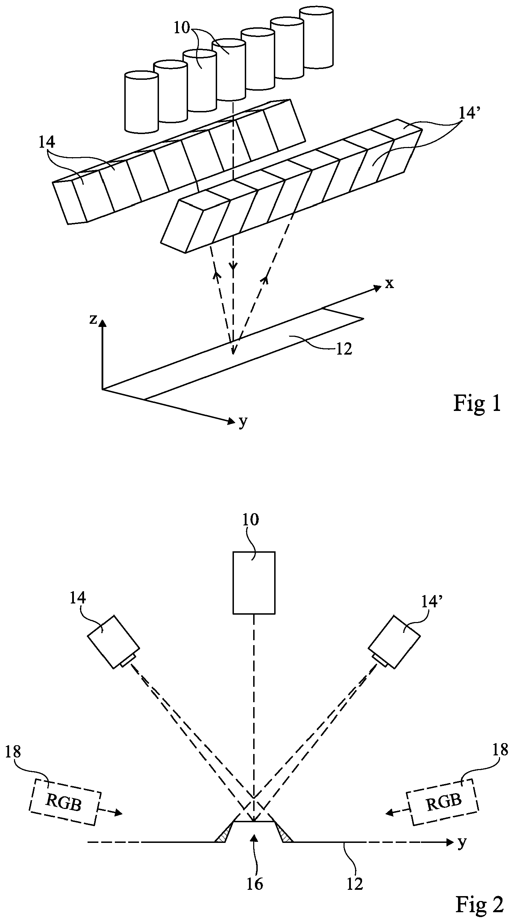

La figure 1 est une perspective schématique d'un dispositif d'acquisition d'images tridimensionnelles tel que décrit dans la demande de brevet européenne publiée sous le numéro EP 2 413 095. La figure 2 est une vue de côté du dispositif de la figure 1, positionné au-dessus d'une scène en relief.

Le dispositif de la figure 1 comprend plusieurs projecteurs 10 placés à la verticale d'une scène tridimensionnelle 12. La scène 12, ou plan d'observation, s'étend selon deux axes x et y, et les projecteurs 10 ont des axes de projection dans cet exemple parallèles à un troisième axe z. La scène 12 est prévue pour être déplacée, entre chaque étape d'acquisition d'images, selon la direction de l'axe y.

Les projecteurs 10 sont alignés les uns avec les autres selon l'axe x, et leurs axes de projection définissent un plan (à l'alignement des projecteurs près) que l'on appellera dans la suite de ce texte plan des projecteurs. Les projecteurs 10 sont dirigés vers la scène 12. On notera que les projecteurs 10 peuvent être prévus de façon que leurs faisceaux se recouvrent légèrement au niveau de la scène 12.

Deux groupes de caméras 14 et 14', par exemple monochromes, sont alignés selon deux droites parallèles à la direction x, les caméras étant tournées vers la scène 12. Dans cet exemple, chaque groupe 14, 14' comprend des caméras positionnées chacune de part et d'autre des projecteurs 10 dans la direction x (quatre caméras au total par projecteur). Les deux groupes 14 et 14' sont placés de part et d'autre des projecteurs 10, et plus particulièrement symétriquement par rapport au plan des projecteurs défini ci-dessus. Les caméras 14 et 14' en regard sont positionnées de sorte que leurs axes optiques respectifs s'étendent dans l'exemple représenté dans un plan perpendiculaire à la direction de l'axe x et sont appariés, une caméra de chaque groupe visant le même point que la caméra de l'autre groupe avec laquelle elle est symétrique. Cela revient à incliner toutes les caméras d'un même angle par rapport à l'axe vertical z. Les caméras 14 peuvent avoir des champs de vision sur la scène 12 qui se chevauchent (par exemple avec un recouvrement de 50 %). Les caméras sont connectées à un dispositif de traitement d'images (non représenté).

Les projecteurs 10 sont disposés pour projeter sur la scène 12 (dans la zone de prise de vue) un motif déterminé qui est reconnu par le système de traitement, par exemple des franges binaires. Dans le cas des dispositifs par détection de formes de franges, une image des motifs peut être affichée et projetée directement par le projecteur numérique, les franges étant prévues pour se superposer aux intersections d'éclairement des différents projecteurs. Connaissant le ou les motifs d'éclairement, les paramètres des projecteurs et les paramètres des caméras, on peut obtenir l'information d'altitude dans la scène, et donc réaliser une reconstruction tridimensionnelle de celle-ci. Les franges s'étendent dans cet exemple parallèlement à l'axe x.

La figure 2 est une vue de côté du dispositif de la figure 1, dans un plan défini par les axes z et y. En figure 2 est illustrée une portion de la scène 12 qui comprend une région non plane 16.

Dans cette figure sont représentés un unique projecteur 10 et deux caméras 14 et 14', l'angle entre l'axe d'éclairement du projecteur 10 et l'axe optique de la caméra 14 étant égal à l'angle entre l'axe d'éclairement du projecteur 10 et l'axe optique de la caméra 14'.

La projection des motifs par le projecteur 10 sur la région non plane 16 implique la déformation de ces motifs dans le plan d'observation, détectée par les caméras 14 et 14'. Cependant, comme cela est représenté en portions hachurées en figure 2, certaines portions de la scène 12 ne sont pas vues par au moins une des caméras. Il s'agit principalement des régions en proche proximité avec les régions en surépaisseur telle que la région 16. Ce phénomène est appelé ombrage.

Lorsqu'il y a ombrage, la reconstruction tridimensionnelle devient complexe. Une bonne configuration optique d'une tête d'acquisition d'image tridimensionnelle doit pouvoir assurer l'acquisition rapide des images nécessaires et la reconstruction précise de la scène 3D selon les trois axes, et avec une bonne fiabilité (sans ombrage, bonne reproductibilité). Ceci n'est pas aisé avec les dispositifs existants, puisque particulièrement coûteux et/ou peu optimal en termes de vitesse d'acquisition.

On notera en outre que plus l'angle de détection est grand (angle entre l'axe d'éclairement du projecteur et l'axe optique de la caméra associée, avec une limite supérieure à 90°), plus la sensibilité de détection tridimensionnelle est importante. Cependant, l'augmentation de cet angle augmente les effets d'ombrage. On notera également que l'angle maximum de triangulation, qui correspond à l'angle entre la caméra et le projecteur si la triangulation est réalisée entre ces éléments, ou à l'angle entre deux caméras si la triangulation est réalisée entre celles-ci, est égal à 90°.

Comme cela est représenté en figure 2 en pointillés, il est courant de prévoir des dispositifs d'éclairement couleur supplémentaires 18 (RGB ou blanc), par exemple non polarisés dans notre exemple, par exemple placés de part et d'autre du plan des projecteurs, selon un angle important avec ceux-ci (éclairage rasant). Ces dispositifs d'éclairement couleur supplémentaires 18 permettent un éclairement de la scène de façon que des images bidimensionnelles couleur puissent également être réalisées, en parallèle de la reconstruction tridimensionnelle. Ce couplage de deux détections, l'une monochrome tridimensionnelle et l'autre couleur bidimensionnelle, assure la reconstruction d'une image finale couleur tridimensionnelle par les moyens de traitement.

Un inconvénient de la structure de la figure 2 comprenant des dispositifs d'éclairement rasants est que le positionnement des caméras de part et d'autre du plan de projection s'en trouve limité. En effet, les caméras 14 et 14' ne peuvent être placées trop près des projecteurs 10 (angle entre le faisceau projeté et l'axe optique des caméras faible) sous peine que les caméras soient dans la zone de réflexion spéculaire des faisceaux fournis par les projecteurs 10, ce qui dégrade la détection. En outre, les caméras 14 et 14' ne peuvent être placées trop loin des projecteurs 10 (angle entre le faisceau projeté et l'axe optique des caméras élevé) sous peine que les caméras soient placées dans la zone de réflexion spéculaire des faisceaux fournis par les dispositifs d'éclairement rasant supplémentaires 18. Cette dernière contrainte implique que la résolution selon l'axe z de la reconstruction 3D est limitée. En pratique, l'angle de détection (angle entre le faisceau projeté et l'axe optique des caméras) peut être limité par ces contraintes à une plage de valeurs comprise entre 18° et 25°.

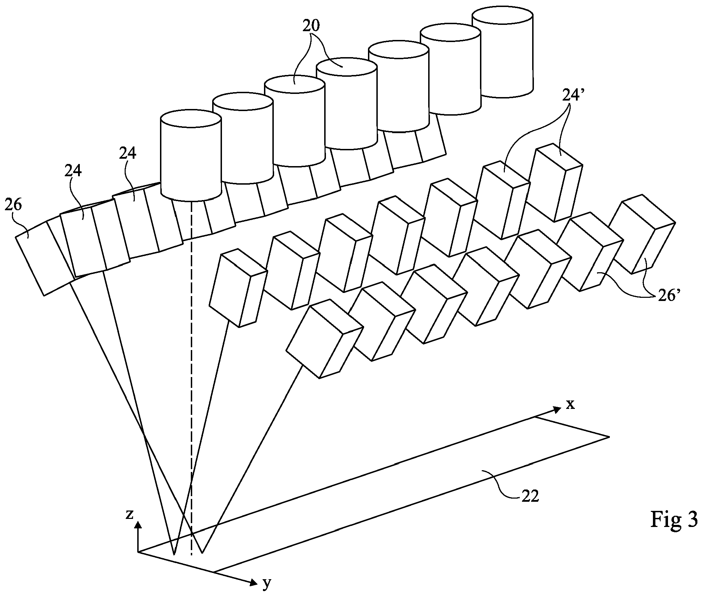

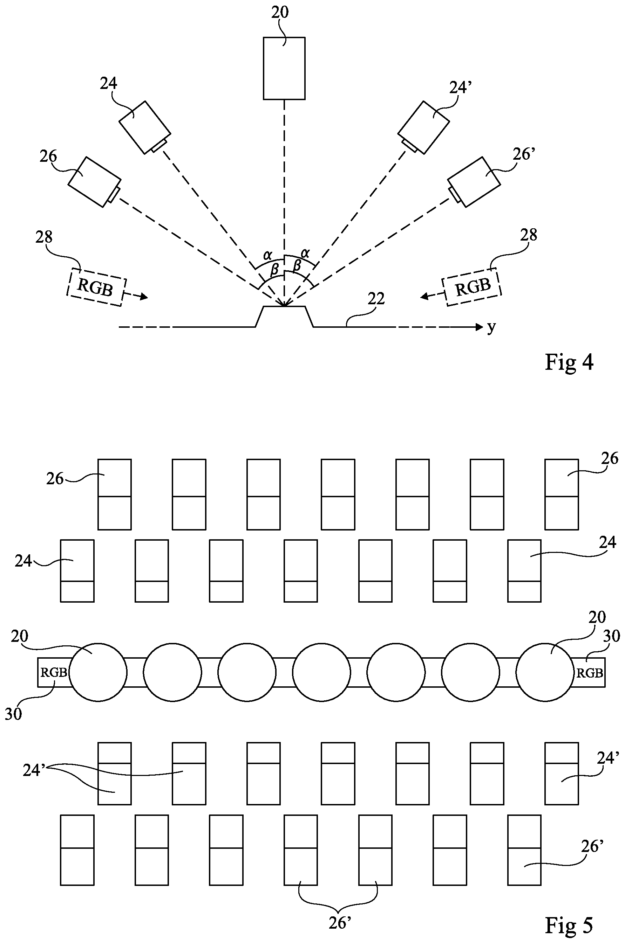

La figure 3 illustre un système d'acquisition d'images tridimensionnelles selon un mode de réalisation, et la figure 4 est une vue de côté du système d'acquisition de la figure 3.

On prévoit ici un système d'acquisition d'images tridimensionnelles comprenant une rangée de projecteurs 20 placés à la verticale d'une scène 22. La scène 22 s'étend selon deux axes x et y, et l'axe d'éclairement des projecteurs 20 est dans cet exemple parallèle à un troisième axe z. La scène, ou la tête d'acquisition, est prévue pour être déplacée, entre chaque acquisition d'images, selon la direction de l'axe y. Le dispositif peut comprendre deux projecteurs 20 ou plus.

Les projecteurs 20 sont alignés les uns avec les autres dans la direction de l'axe x, sont dirigées vers la scène 22, et leurs axes de projection définissent un plan que l'on appellera dans la suite de ce texte plan des projecteurs.

Quatre groupes de caméras 24, 24', 26, 26' sont alignés selon quatre droites parallèles à la direction x, les caméras 24, 24', 26, 26' étant tournées vers la scène 22. Les axes optiques de chacune des caméras 24, 24', 26, 26' sont inclus dans l'exemple représenté dans des plans perpendiculaires à l'axe x. Ainsi, les caméras 24 sont alignées selon la direction de l'axe x, de même que les caméras 24', les caméras 26 et les caméras 26'. Deux groupes de caméras 24 et 26 sont placés d'un côté du plan des projecteurs et deux groupes de caméras 24' et 26' sont placés de l'autre côté du plan des projecteurs. Les groupes 24 et 24' peuvent être placés symétriquement de part et d'autre des projecteurs 20, et les groupes 26 et 26' peuvent être placés symétriquement de part et d'autre des projecteurs 20, comme cela est illustré en figures 3 et 4.

Les caméras en regard 24 et 24', respectivement 26 et 26', sont positionnées de sorte que leurs axes optiques respectifs sont, dans l'exemple représenté, perpendiculaires à l'axe x et sont appariés. Cela revient à incliner les caméras des groupes 24 et 24' d'un même angle par rapport à l'axe vertical z et à incliner les caméras des groupes 26 et 26' d'un même angle par rapport à l'axe vertical z. L'angle peut être identique (au signe près) pour les caméras des groupes 24 et 24' et pour les caméras des groupes 26 et 26'. Le champ de vision de chaque caméra est de préférence défini de sorte que chaque zone de la scène dans les champs traités est couverte par quatre caméras. A titre de variante, des angles distincts pour chacune des caméras associées à un projecteur peuvent être prévus. Les caméras 24, 26, 24' et 26' sont connectées à un dispositif de traitement d'images (non représenté).

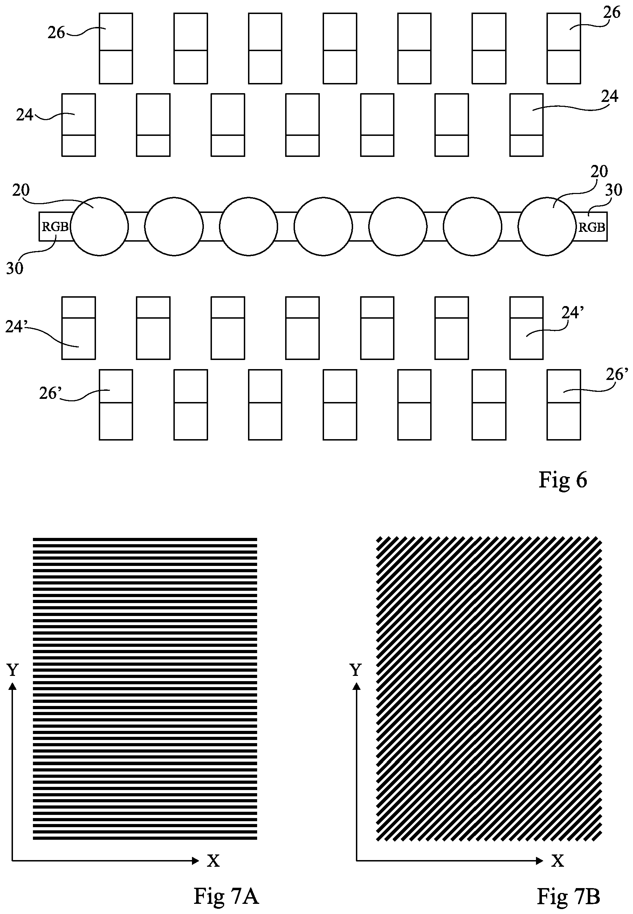

En pratique, à chaque projecteur sont associées quatre caméras, une de chacun des groupes 24, 24', 26, 26'. Les différentes variantes de disposition des caméras par rapport aux projecteurs seront décrites ci-après plus en détail en relation avec les figures 5 et 6.

Les projecteurs 20 sont disposés pour projeter sur la scène 22 (dans la zone de prise de vue) un motif déterminé qui est reconnu par le dispositif de traitement, par exemple des franges. Dans le cas de dispositifs par détection de formes de motifs, une image des motifs peut être affichée et projetée directement par les projecteurs numériques pour se superposer aux intersections d'éclairement des différents projecteurs, par exemple comme cela est décrit dans les demandes de brevet EP 2413095 et EP 2413132. Connaissant le ou les motifs d'éclairement, les paramètres des projecteurs et les paramètres des caméras, on peut obtenir l'information d'altitude dans la scène, et donc une reconstruction tridimensionnelle de celle-ci.

Avantageusement, la formation de deux rangées de caméras de part et d'autre du plan des projecteurs à des angles d'orientation distincts assure une détection aisée de la structure tridimensionnelle et sans problèmes d'ombrage, ainsi qu'un traitement rapide des informations.

En effet, l'utilisation de quatre caméras par projecteur, positionnées selon des angles de vue distincts (angles entre le faisceau projeté et l'axe optique de la caméra), assure la réalisation d'une détection fiable limitant les phénomènes d'ombrage et une bonne reproductibilité, tout en assurant une acquisition rapide des images nécessaires à la reconstruction, dans les trois directions, des éléments constituant la scène.

Cela est dû au fait que chaque portion de la scène 22 est vue par quatre caméras avec des angles de vue distincts, ce qui assure une résolution de la reconstruction 3D importante. En outre, pour augmenter la résolution et la fiabilité de reconstruction des images 3D, plutôt que de projeter des franges binaires, on peut prévoir d'utiliser une série de franges sinusoïdales déphasées dans l'espace, par exemple grises, c'est-à-dire légèrement déplacée entre chaque acquisition, une acquisition étant faite à chaque nouvelle phase du motif projeté. Les projecteurs 20 projettent tous en même temps une des phases des motifs et les caméras acquièrent en même temps les images des franges déformées par la scène, et ainsi de suite à chaque déphasage dimensionnel des motifs. A titre d'exemple, on peut prévoir au moins trois déphasages des motifs, par exemple 4 ou 8, c'est-à-dire qu'à chaque position du dispositif d'acquisition en surface de la scène, on prévoit au moins trois acquisitions, par exemple 4 ou 8 acquisitions.

Enfin, le positionnement des caméras selon des angles de vue distincts de part et d'autre du plan des projecteurs assure une reconstruction des images tridimensionnelles, même dans des cas où des phénomènes d'ombrage seraient apparus avec les dispositifs précédents : dans ce cas, la reconstruction 3D se fait non pas entre deux caméras placées de part et d'autre du plan des projecteurs mais entre deux caméras placées du même côté du plan des projecteurs. Ceci assure une bonne reconstruction tridimensionnelle, en association avec un dispositif de traitement des informations adapté.

De la même façon que dans les dispositifs existants, une partie du champ de projection d'un projecteur peut être recouverte par ceux des projecteurs adjacents. La lumière de projection de chaque projecteur peut être polarisée linéairement suivant une direction, et les caméras peuvent être équipées d'un polariseur linéaire en entrée de leur champ de vision de façon à stopper la plupart de la lumière du projecteur se réfléchissant sur les objets (réflexion spéculaire). En outre, le capteur d'image placé dans chacune des caméras peut être légèrement incliné pour avoir la netteté sur toute l'image du champ incliné de la caméra.

Un traitement numérique de reconstruction des images 3D est nécessaire, à partir des différentes images de motifs déformés. Deux paires de caméras de détection placées autour de chaque projecteur permettent d'obtenir une super-résolution 3D. Comme chaque champ de projection et de détection est partiellement couvert par ceux des projecteurs et caméras adjacents, un traitement spécifique des images peut être nécessaire et ne sera pas décrit en détail ici.

La figure 4 reprend le dispositif de la figure 3 en vue de côté. Dans cette figure est illustré uniquement un projecteur 20 et une caméra de chaque groupe 24, 24', 26 et 26'. On appelle α l'angle entre l'axe du projecteur 20 (axe z) et l'axe optique des caméras 24 et 24' et on appelle β l'angle entre l'axe z et l'axe optique des caméras 26 et 26'. Dans l'exemple de la figure 4, on a α < β.

On notera que les angles α et β pourront être différents pour chacune des caméras des différents groupes, l'idée générale ici étant d'associer, au faisceau issu de chaque projecteur, au moins quatre caméras dont les axes optiques peuvent être dans un plan perpendiculaire à l'axe x, ou non, et dont les axes optiques forment au moins deux angles distincts avec l'axe de projection de part et d'autre du plan des projecteurs.

Comme cela est illustré en figure 4, un éclairage couleur rasant périphérique 28 (RGB) optionnel, dans cet exemple non polarisé, peut être prévu dans le dispositif des figures 3 et 4. Dans ce cas, et de la même façon que décrit en relation avec les figures 1 et 2, l'angle α minimum est égal à 18° pour éviter que le champ de vision des caméras soit dans le champ de réflexion spéculaire des projecteurs 20. En outre, l'angle β maximum peut être de 25° pour éviter que le champ de vision des caméras soit dans le champ de réflexion spéculaire de l'éclairage couleur rasant périphérique, en fonction du type d'éclairement. On notera que, pour que la reconstruction 3D puisse se faire correctement, il faut prévoir au minimum une différence d'au moins 10° entre les angles α et β, de préférence d'au moins 15°.

A titre de variante de réalisation, l'éclairage rasant périphérique peut être remplacé par un éclairage axial, dont la direction de projection principale est orthogonale au plan d'observation 22, c'est-à-dire parallèle à l'axe z. Cette variante assure un placement des différents groupes de caméras 24, 24', 26 et 26' selon des angles β qui peuvent aller jusqu'à 70°. Cela permet une détection tridimensionnelle présentant une grande sensibilité, puisque l'angle de détection peut être important.

En fonction du type d'éclairement utilisé pour l'éclairage couleur axial, l'angle de détection minimal des caméras 24 et 24' (angle α) peut être de l'ordre de 18°, pour éviter que les caméras soient placées dans la zone de réflexion spéculaire de l'éclairage couleur axial.

On notera que la valeur maximale de 70° pour l'angle β a été calculée pour une application particulière d'utilisation du système d'inspection, à savoir l'inspection de cartes de circuit imprimé. En effet, sur une telle carte, les éléments dans le champ d'observation peuvent avoir des dimensions de l'ordre de 200 µm, être séparés d'un pas de l'ordre de 400 µm et présenter une épaisseur de l'ordre de 80 µm. Un angle maximal de 70° pour les caméras d'observation assure qu'un objet dans le champ d'observation ne soit pas masqué par un objet voisin. Cependant, cet angle maximal peut être différent de celui proposé ici dans le cas d'applications où les topologies sont différentes de celles de cet exemple.

En pratique, si les caméras sont monochromes, elles acquièrent, après chaque ensemble d'acquisitions d'image 3D, trois images pour chacune des composantes rouge, verte et bleue (R, G, B) de l'éclairage couleur RGB, qu'il soit périphérique ou axial. L'image couleur 2D est ensuite reconstruite à partir des images des composantes rouge, verte et bleue. Une combinaison des images 3D monochrome et 2D couleur permet la reconstruction d'une image 3D couleur. On peut également prévoir alternativement une source lumineuse de couleur blanche pour une image 2D couleur avec des caméras couleur associées.

A titre d'exemple d'applications numériques, dans le cas d'un éclairage couleur RGB rasant périphérique, on peut prévoir que la valeur moyenne (si plusieurs angles a sont prévus pour les caméras 24 et 24') de l'angle α, pour les caméras 24 et 24', soit égal à 18° et que la valeur moyenne (si plusieurs angles β sont prévus pour les caméras 26 et 26') de l'angle β, pour les caméras 26 et 26', soit égal à 25°. Dans le cas d'un éclairage couleur RGB axial, on peut prévoir que la valeur moyenne (si plusieurs angles α sont prévus pour les caméras 24 et 24') de l'angle α, pour les caméras 24 et 24', soit égal à 21° et que la valeur moyenne (si plusieurs angles β sont prévus pour les caméras 26 et 26') de l'angle β, pour les caméras 26 et 26', soit égal à 36°.

Les figures 5 et 6 sont des vues de dessus de deux dispositifs d'acquisition selon des modes de réalisation, dans lesquels un éclairage couleur RGB axial 30 est prévu. On notera que les deux variantes de positionnement des caméras illustrées en figures 5 et 6 sont également compatibles avec la réalisation d'un dispositif d'inspection comprenant un dispositif d'éclairage couleur rasant périphérique (28).

Dans ces deux figures, un éclairage couleur axial RGB est prévu. Comme cela est illustré, des éléments d'éclairement 30 de cet éclairage sont intercalés entre chacun des projecteurs 20, leur direction d'éclairement principale étant parallèle à l'axe z.

Dans l'exemple de la figure 5, les caméras 24 sont positionnées avec un angle α égal aux caméras 24', et les caméras 26 sont positionnées avec un angle β égal aux caméras 26'. En outre, les caméras 24 sont positionnées selon l'axe x au même niveau que les caméras 26' (l'axe optique d'une caméra 24 est coplanaire à l'axe optique d'une caméra 26'), et les caméras 26 sont positionnées selon l'axe x au même niveau que les caméras 24'(l'axe optique d'une caméra 26 est coplanaire à l'axe optique d'une caméra 24'). Les caméras 24, 24', 26 et 26' sont positionnées selon l'axe x de façon qu'un groupe de quatre caméras, appartenant chacune à l'un des groupes 24, 24', 26 et 26', encadre un projecteur 20. Ainsi, le pas séparant chacune des caméras d'un groupe 24, 24', 26 et 26' est identique au pas séparant chacun des projecteurs 20. Les caméras sont placées suivant l'axe x avec un décalage de 25 % du pas des projecteurs de part et d'autre des projecteurs 20.

Selon une variante de réalisation non représentée, deux caméras situées au même niveau le long de l'axe x peuvent être placées sur cet axe au même niveau que le projecteur 20 associé, et les caméras adjacentes le long de l'axe x sont positionnées, selon l'axe x, au milieu de deux projecteurs adjacents.

Dans l'exemple de la figure 6, les caméras 24 sont positionnées avec un angle α égal aux caméras 24', et les caméras 26 sont positionnées avec un angle β égal aux caméras 26'. En outre, les caméras 24 sont positionnées selon l'axe x au même niveau que les caméras 24' (l'axe optique d'une caméra 24 est coplanaire à l'axe optique d'une caméra 24'), et les caméras 26 sont positionnées selon l'axe x au même niveau que les caméras 26' (l'axe optique d'une caméra 26 est coplanaire à l'axe optique d'une caméra 26'). En outre, les caméras 24, 24', 26 et 26' sont positionnées selon l'axe x de façon qu'un groupe de quatre caméras, appartenant chacune à l'un des groupes 24, 24', 26 et 26', encadre un projecteur 20. Ainsi, le pas séparant chacune des caméras d'un groupe 24, 24', 26 et 26' est identique au pas séparant chacun des projecteurs 20. Les caméras sont placées suivant l'axe x avec un décalage de 25 % du pas des projecteurs de part et d'autre des projecteurs 20.

Selon une variante de réalisation non représentée, deux caméras situées au même niveau le long de l'axe x peuvent être placées sur cet axe au même niveau que le projecteur 20 associé, et les caméras adjacentes le long de l'axe x sont positionnées, selon l'axe x, au milieu de deux projecteurs adjacents.

Les figures 7A et 7B illustrent des motifs projetés par un dispositif selon un mode de réalisation.

Avec les dispositifs des figures 3 à 6, et avec les variantes de positionnement ci-dessus, on peut prévoir que chacun des projecteurs 20 projette des motifs sinusoïdaux successivement déphasés à chaque acquisition des caméras.

La figure 7A illustre de tels motifs qui s'étendent, de façon classique, selon l'axe x. Avant chaque acquisition par les caméras, pour une position du système d'acquisition au-dessus de la scène, c'est-à-dire avant chacune des 4 ou 8 acquisitions par exemple, le motif est décalé selon l'axe y d'un déphasage de 2n/4 ou de 2n/8.

La figure 7B illustre une variante de motifs particulièrement adaptés à des systèmes d'acquisition selon un mode de réalisation. Dans cette variante, les franges sinusoïdales formant le motif ne s'étendent pas selon l'axe x mais s'étendent selon un angle dans le plan x/y.

On notera que cette configuration est particulièrement adaptée au mode de réalisation de la figure 5 dans lequel quatre caméras entourant un projecteur 20 sont positionnées de part et d'autre du plan des projecteurs, en vue de dessus, selon une même diagonale dans le plan x/y. Dans ce cas, on prévoit de former des motifs s'étendant dans le plan x/y selon un angle perpendiculaire à la diagonale d'alignement des caméras de part et d'autre du plan des projecteurs dans le plan x/y. Cela permet d'améliorer encore la résolution tridimensionnelle selon l'axe z.

Dans le cas où les quatre caméras associées à un projecteur sont placées symétriquement par rapport au plan des projecteurs (exemple de la figure 6), on peut également prévoir que les franges s'étendent selon un angle dans le plan x/y. Dans ce cas, la résolution d'une seule paire de caméras d'un côté du plan des projecteurs est augmentée.

Le traitement numérique permettant de tirer profit des informations des différentes caméras des dispositifs selon un mode de réalisation ne sera pas décrit ici plus en détail. En effet, connaissant le ou les motifs d'éclairement, les paramètres des différents projecteurs et les paramètres des caméras, l'information d'altitude dans la scène (donc la reconstruction tridimensionnelle) peut être obtenue à l'aide de moyens de calcul et de traitement d'image classiques programmés pour cette application. Si chaque champ de projection et de détection est partiellement couvert par ceux des projecteurs et caméras adjacents, un traitement spécifique des images peut être nécessaire. On peut également prévoir de n'utiliser qu'un projecteur sur deux à la fois pour éviter les recouvrements des champs d'éclairement, cette solution impliquant cependant un temps d'acquisition plus long. L'image couleur bidimensionnelle des objets peut être reconstruite à partir des images rouge, verte et bleue (RGB), et l'image 3D couleur par une combinaison de toutes ces acquisitions.

Des modes de réalisation particuliers ont été décrits. Diverses variantes et modifications apparaîtront à l'homme de l'art. En particulier, les variantes des figures 3 à 6 pourront être combinées ou juxtaposées dans un même dispositif si cela est désiré. En outre, comme on l'a vu précédemment, les angles α et β pourront être différents pour chacune des caméras des différents groupes, l'idée générale ici étant d'associer, à chacun des projecteurs, au moins quatre caméras dont les axes optiques forment au moins deux angles distincts avec le plan des projecteurs de part et d'autre de celui-ci. En outre, les axes optiques des caméras peuvent être perpendiculaires à l'axe d'alignement des projecteurs. On notera que les quatre caméras associées à un projecteur pourront également toutes avoir des axes optiques non coplanaires.

En outre, on notera qu'un système comprenant plus de quatre caméras par projecteur peut également être envisagé. Enfin, on a présenté ici des dispositifs dans lesquels les axes optiques des différentes caméras associées à un projecteur sont dans des plans perpendiculaires à l'axe x. On notera que ces axes optiques peuvent également être dans des plans différents de ceux-ci.

Divers modes de réalisation avec diverses variantes ont été décrits ci-dessus. On notera que l'homme de l'art pourra combiner divers éléments de ces divers modes de réalisation et variantes sans faire preuve d'activité inventive.

## Revendications

1. Dispositif d'acquisition d'images tridimensionnelles, comprenant :
au moins deux systèmes distincts, comprenant chacun un projecteur et quatre caméras,
les au moins deux projecteurs (20) étant alignés selon une direction (x) et adaptés à éclairer une scène (22), les axes de projection des projecteurs définissant un plan ;
le dispositif étant tel que, pour chaque projecteur (20), et tournées vers la scène (22), la première et la deuxième caméras (24, 26) sont placées d'un côté dudit plan et la troisième et la quatrième caméras (24', 26') sont placées d'un autre côté dudit plan, l'axe optique des première et deuxième caméras (24, 26) formant respectivement avec ledit plan un premier et un deuxième angles distincts, l'axe optique des troisième et quatrième caméras (24', 26') formant respectivement avec ledit plan un troisième et un quatrième angles distincts ; et
le dispositif comprenant en outre des dispositifs d'éclairement alternatifs de couleur bleue, rouge, verte ou blanche.

2. Dispositif selon la revendication 1, dans lequel les axes optiques des premières, deuxièmes, troisièmes et quatrièmes caméras sont perpendiculaires à ladite direction (x).

3. Dispositif selon la revendication 1 ou 2, dans lequel les premier et troisième angles sont égaux et les deuxième et quatrième angles sont égaux, au signe près.

4. Dispositif selon l'une quelconque des revendications 1 à 3, dans lequel, pour chaque projecteur (20), les axes optiques des première et troisième caméras (24, 26') sont coplanaires et les axes optiques des deuxième et quatrième caméras (24', 26) sont coplanaires.

5. Dispositif selon l'une quelconque des revendications 1 à 3, dans lequel, pour chaque projecteur (20), les axes optiques des première et quatrième caméras (24, 26') sont coplanaires et les axes optiques des deuxième et troisième caméras (24', 26) sont coplanaires.

6. Dispositif selon l'une quelconque des revendications 1 à 5, dans lequel toutes les caméras (24, 24', 26, 26') sont intercalées entre les projecteurs (22) dans ladite direction (x).

7. Dispositif selon l'une quelconque des revendications 1 à 6, dans lequel le premier angle est supérieur à 18° et est inférieur au deuxième angle, l'écart entre le premier et le deuxième angle étant supérieur à 10°, et le troisième angle est supérieur à 18° et inférieur au quatrième angle, l'écart entre le troisième et le quatrième angle étant supérieur à 10°.

8. Dispositif selon l'une quelconque des revendications 1 à 7, dans lequel les dispositifs d'éclairement (30) sont intercalés entre chacun des projecteurs (22) et sont adaptés à éclairer la scène (22).

9. Dispositif selon l'une quelconque des revendications 1 à 8, dans lequel chacune des caméras comprend un capteur d'image placé de façon inclinée par rapport à l'axe optique de la caméra.

## Patentansprüche

1. Eine dreidimensionale Bildaufnahmevorrichtung, die Folgendes aufweist:
wenigstens zwei separate Systeme, die jede einen Projektor und vier Kameras aufweisen, wobei die wenigstens zwei Projektoren (20) entlang einer Richtung (x) ausgerichtet sind und in der Lage sind, eine Szene (22) zu beleuchten, und die Projektionsachsen der Projektoren eine Ebene definieren;
wobei die Vorrichtung so ist, dass für jeden Projektor (20), der zur Szene (22) weist, die erste und zweite Kamera (24, 26) auf einer Seite der Ebene angeordnet sind und die dritte und vierte Kamera (24', 26') auf der anderen Seite der Ebene angeordnet sind, wobei die optische Achse der ersten und zweiten Kamera (24, 26) jeweils einen ersten und einen zweiten unterschiedliche Winkel mit der Ebene bilden, und die optische Achse der dritten und vierten Kamera (24', 26') jeweils einen dritten und einen vierten unterschiedliche Winkel mit der Ebene bilden; und
die Vorrichtung ferner blau-, rot-, grün- oder weiß-farbig alternierende Beleuchtungsvorrichtungen enthält.

2. Vorrichtung gemäß Anspruch 1, wobei die optischen Achsen der ersten, zweiten, dritten und vierten Kamera senkrecht zur Richtung (x) sind.

3. Vorrichtung gemäß Anspruch 1 oder 2, wobei der erste und dritte Winkel und der zweite und vierte Winkel hinsichtlich des Vorzeichens gleich sind.

4. Vorrichtung gemäß einem der Ansprüche 1 bis 3, wobei für jeden Projektor (20), die optischen Achsen der ersten und dritten Kamera (24, 26') koplanar sind und die optischen Achsen der zweiten und vierten Kamera (24', 26) koplanar sind.

5. Vorrichtung gemäß einem der Ansprüche 1 bis 3, wobei für jeden Projektor (20), die optischen Achsen der ersten und vierten Kamera (24, 26') koplanar sind und die optischen Achsen der zweiten und dritten Kamera (24', 26) koplanar sind.

6. Vorrichtung nach einem der vorhergehenden Ansprüche 1 bis 5, wobei alle Kameras (24, 24', 26, 26') zwischen den Projektoren (22) in Richtung (x) angeordnet sind.

7. Vorrichtung nach einem der vorhergehenden Ansprüche 1 bis 6, wobei der erste Winkel größer als 18° und kleiner als der zweite Winkel ist und das Intervall zwischen dem ersten und zweiten Winkel größer als 10° ist und wobei der dritte Winkel größer als 18° und kleiner als der vierte Winkel ist und das Intervall zwischen dem dritten und vierten Winkel größer als 10° ist.

8. Vorrichtung nach einem der vorhergehenden Ansprüche 1 bis 7, wobei die Beleuchtungsvorrichtungen (30) zwischen jedem der Projektoren (22) angeordnet sind und in der Lage sind, die Szene (22) zu beleuchten.

9. Vorrichtung nach einem der Ansprüche 1 bis 8, wobei jede der ersten und zweiten Kameras einen Bildsensor aufweist, der in Bezug auf die optische Achse der Kamera geneigt ist.

## Claims

1. A three-dimensional image acquisition device comprising:
at least two separate systems, each including a projector and four cameras, said at least two projectors (20) being aligned along a direction (x) and capable of illuminating a scene (22), the projection axes of the projectors defining a plane;
the device being such as, for each projector (20) and facing the scene (22), the first and the second cameras (24, 26) are placed on one side of said plane and the third and the fourth cameras (24', 26') are placed on another side of said plane, the optical axis of the first and second cameras (24, 26) respectively forming with said plane a first and a second different angles, the optical axis of the third and fourth cameras (24', 26') respectively forming with said plane a third and a fourth different angles; and
the device further including blue-, red-, green-, or white-colored alternated illumination devices.

2. The device of claim 1, wherein the optical axes of the first, second, third, and fourth cameras are perpendicular to said direction (x).

3. The device of claim 1 or 2, wherein the first and third angles are equal and the second and fourth angles are equal, to within their sign.

4. The device of any of claims 1 to 3, wherein, for each projector (20), the optical axes of the first and third cameras (24, 26') are coplanar and the optical axes of the second and fourth cameras (24', 26) are coplanar.

5. The device of any of claims 1 to 3, wherein, for each projector (20), the optical axes of the first and fourth cameras (24, 26') are coplanar and the optical axes of the second and third cameras (24', 26) are coplanar.

6. The device of any of claims 1 to 5, wherein all cameras (24, 24', 26, 26') are interposed between the projectors (22) in said direction (x).

7. The device of any of claims 1 to 6, wherein the first angle is greater than 18° and is smaller than the second angle, the interval between the first and the second angle being greater than 10°, and the third angle is greater than 18° and smaller than the fourth angle, the interval between the third and the fourth angle being greater than 10°.

8. The device of any of claims 1 to 7, wherein the illumination devices (30) are interposed between each of the projectors (22) and are capable of illuminating the scene (22).

9. The device of any of claims 1 to 8, wherein each of the first and second cameras comprises an image sensor inclined with respect to the optical axis of the camera.
